# EUROPÄISCHE PATENTSCHRIFT

(11) **EP 2 215 907 B1**
(45) Veröffentlichungstag und Bekanntmachung des Hinweises auf die Patenterteilung: **10.04.2013**
(21) Anmeldenummer: 10001275.6
(22) Anmeldetag: 08.02.2010
(51) Int. Cl.: A01M 13/00

(54) **Vorrichtung zum Ändern der Zusammensetzung des sich im Innenraum eines Containers befindlichen Gasvolumens und Verfahren zum Ändern der Zusammensetzung**
Device for altering the composition of the gas volume in the interior of a container and method for altering the composition
Dispositif de modification de la composition du volume de gaz se trouvant dans l'espace intérieur d'un conteneur et procédé de modification de la composition

(30) Priorität: 10.02.2009 DE 102009008322
(43) Veröffentlichungstag der Anmeldung: 11.08.2010
(73) Patentinhaber: Wutzler, Dieter, 21217 Seevetal (DE)
(72) Erfinder: Wutzler, Dieter, 21217 Seevetal (DE)
(74) Vertreter: Müller Schupfner & Partner

(56) Entgegenhaltungen:
- WO-A1-02/03797
- WO-A1-2005/056425
- WO-A1-2007/036000

## Beschreibung

Die Erfindung bezieht sich auf eine Vorrichtung zum Ändern der Zusammensetzung des sich im Innenraum eines Containers befindlichen Gasvolumens und ein Verfahren zum Ändern der Zusammensetzung.

Container, insbesondere Container, die aus Übersee kommen, sind vielfach mit gesundheitsschädlichen Substanzen versehen, um den in diesen transportierten Inhalt zu schützen, Schädlinge zu vertreiben oder abzutöten oder Krankheitskeime zu beseitigen. Die Substanzen werden als Begasungsstoffe wie beispielsweise Formaldehyd, Phosphorwasserstoff, Blausäure, Methylbromid und Ammoniak eingesetzt oder als Feststoffe mit niedrigem Dampfdruck.

Diese giftigen Gase müssen vor dem Entladen der Container entfernt werden, damit Personen nicht zu Schaden kommen. Bei dem Entfernen giftiger Gase kommt es bei den gebräuchlichen Absaugmethoden immer wieder zu Unfällen durch Vergiftungen.

Aus der WO 2006/116809 A1 ist es bekannt, mittels einer Absaugvorrichtung ein giftetes Gas aus dem frei verfügbaren Innenraum eines Containers abzusaugen. Der Container ist dazu mit Absaugöffnungen versehen, durch die hindurch Gas aus dem Innenraum abgesaugt wird. Handelsübliche Normalcontainer besitzen aber keine Absaugöffnungen, sondern nur zwei Containertüren an einem Längsende. Besondere Absaugöffnungen bedürfen also spezieller Container. Ein Nachteil dieser Absaugung ist auch, dass der Container zum Gasabsaugen nicht großflächig geöffnet ist. Die Absaugung erreicht deshalb zwischen dem transportierten Gut nur schwer alle freien giftigen Gasanteile.

Aus der JP 2303442 (A) ist eine kastenförmige Beräucherungsvorrichtung bekannt, die ein Räuchergas in einen Container beim Entladen von einem Schiff einbringen soll, Das Beräuchern erfolgt bei geschlossenen Containertüren und ist wenig durchgreifend.

Aus der WO 2005/056426 A1 ist eine Vorrichtung zum Ändern der Zusammensetzung des sich im Innenraum eines Containers befindlichen beweglichen Gasvolumens bekannt, wobei die Vorrichtung mit einer Öffnung ihres Gehäuses, die sich beim Ansetzen an den Container um zumindest eine zu öffnende Tür der Containertürwand herum erstreckt, dichtend an den Container ansetzbar ist und das Gehäuse Gas-Austauschvorrichtungen zum Austausch des Gasvolumen im Container angeschlossen sind, mittels der die Zusammensetzung des Gasvolumens im Container veränderbar ist.

Es ist Aufgabe der Erfindung, eine Möglichkeit zu schaffen, mit der rasch und möglichst vollständig das in einem Container frei verfügbare Gas, also die Luftatmosphäre, die das im Container transportierte Gut umgibt, ausgetauscht werden kann. Auf den für das Personal gefahrlosen vollständigen Austausch einer giftigen Atmosphäre im Container ist dabei ein besonderes Augenmerk gerichtet. Ebenso soll eine Möglichkeit geschaffen werden, mit der rasch und möglichst vollständig die frei verfügbare Luftatmosphäre in einem Container nach dem Beladen mit zu transportierendem Gut durch Gas zu ersetzen, das Schadstoffe oder schädliches Getier abtötet.

Die gestellte Aufgabe ist erfindungsgemäß gelöst mit einer Vorrichtung und einem Verfahren gemäß den unabhängigen Ansprüchen. Bevorzugte Ausführungsformen sind Gegenstand der Unteransprüche und/oder nachfolgend beschrieben. Die Vorrichtung zum Ändern der Zusammensetzung des sich im Innenraum eines Containers befindlichen Gasvolumens, ist mit einer Öffnung ihres Gehäuses, die sich beim Ansetzen um die zu öffnenden Türen der Container-Türwand herum erstreckt, versehen und dichtend an den Container ansetzbar, so dass das Gehäuse Öffnungsvorrichtungen für ein dem Bedarf angepasstes Bewegen der Türen zum Zwecke des Öffnens und Schließens im gasdicht verschließbaren Gehäuse-Innenraum aufweist und dass an den Gehäuse-Innenraum Gas-Austauschvorrichtungen für das frei verfügbare Gasvolumen im Container angeschlossen sind, mittels der das Gasvolumen im Container veränderbar ist.

Unter einem Bewegen der Containertüren ist das Öffnen und/oder das Schließen der Türen in den Gehäuse-Innenraum hinein zu verstehen, wenn die Vorrichtung an den Container angedockt ist. Eine solche Veränderung der Zusammensetzung des frei verfügbaren Gasvolumens kann ein Entfernen eines gesundheitsgefährdenden Gases aus dem Container sein oder umgekehrt das Einbringen eines solchen Gases in den Container. Beim Einbringen eines gesundheitsgefährdenden Gases muss nur wieder ein mechanisches selbsttätiges Schließen der Containertüren folgen.

Eine solche Vorrichtung kann an den geschlossenen Container herangeführt werden. Wenn die Containertüren beim Entfernen eines giftigen Gases in die gasdicht verschlossene Vorrichtung hinein automatisch geöffnet werden, dann kann es zu keinen Verletzungen kommen.

Durch das Anschließen des Vorrichtungs-Innenraumes an die Gasaustauschvorrichtungen wird bei geöffneten Containertüren automatisch das im Austausch befindliche Gasvolumen im Vorrichtungs-Innenraum mit dem Innenraum des Containers in Verbindung gebracht und so ein großflächiger, rascher Austausch vollzogen. Wenn umgekehrt das Innere des Containers mit einem gesundheitsgefährdenden Gas begast wird, dann kann es ebenfalls zu keinen Verletzungen kommen, weil nach dem erneuten automatischen Schließen der Containertüren und dem Entgasen des Vorrichtungs-Innenraumes Bedienungspersonen nicht mit gesundheitsschädlichen Gasen in Berührung kommen.

Nach einer Ausgestaltung der Erfindung ist vorgesehen, dass die Austauschvorrichtungen für das im Container befindliche, frei verfügbare Gasvolumen aus mindestens einer Absaug- und mindestens einer Belüftungsvorrichtung bestehen. Die Absaugvorrichtung sorgt für ein Entfernen der ungewünschten Gase aus dem Container durch Absaugen und die Belüftungsvorrichtung sorgt für ein Nachliefern neutralen Gases, beispielsweise frische Umgebungsluft, in die von ungewünschtem Gas befreiten Räume des Containers. Beim Begasen bläst die Belüftungsvorrichtung giftiges Gas in den Container ein. Der Begriff des ungewünschten, meist giftigen Gases ist natürlich weit zu sehen. Die zu ersetzenden Gasvolumina müssen nicht unbedingt giftig sein. Es genügt, wenn sie im speziellen Fall unerwünscht sind.

Nach einer weiteren Ausgestaltung der Erfindung ist vorgesehen, dass das Gehäuse mit Seitenwänden, einer Deckenwand, einer Bodenwand, einer rückwärtigen Abschlusswand und einem zur Container Türwand hin offenen Ansetztor ausgebildet ist, z.B. kastenförmig, mit dem die Vorrichtung an den Container mit einer Ansetzdichtung im Wesentlichen gasdicht ansetzbar ist. Durch einfaches Anfahren der Vorrichtung an den Container und einen gasdichten Anschluss kann die Vorrichtung, z.B. selbsttätig, zu arbeiten beginnen.

Nach einer weiteren Ausgestaltung der Erfindung ist vorgesehen, dass Ansetzdichtungsstreifen der Vorrichtung zum Abdichten seitlich gegen die Eckpfosten des Containers zwischen den oberen und unteren Eckbeschlägen drückbar sind. Die Container haben nicht alle gleiche Abmessungen. Durch das seitliche Abdichten sind Abmessungstoleranzen bedeutungslos.

Nach einer weiteren Ausgestaltung der Erfindung ist vorgesehen, dass ein Aufsitzdichtungsstreifen zum deckenseitigen Abdichten von oben gegen den Dachquerträger drückbar ist. Auch die Höhen der Container haben Toleranzen. Wird der Aufsitzdichtungsstreifen von oben gegen den Container gefahren, dann sind auch solche Höhendifferenzen bedeutungslos.

Nach einer weiteren Ausgestaltung der Erfindung ist vorgesehen, dass die Öffnungsvorrichtungen für die Türen an die Türwand mit den noch geschlossenen Türen so heranführbar sind, dass mit den Öffnungsvorrichtungen die Türverschlussstangen durch maschinelles Drehen automatisch in die Offenposition drehbar sind, und dass die Türen nach dem Drehen der Türverschlussstangen in die Offenposition von Stellmechanismen der Öffnungsvorrichtungen aufschwenkbar sind. Damit ist zum Öffnen der Türen und beim späteren Gasaustausch oder bei Gasänderungen keine menschliche Bedienungskraft notwendig und anwesend, die eventuell mit gesundheitsschädlichen Gasen in Berührung kommen kann. Gesundheitsschäden sind also ausgeschlossen.

Nach einer weiteren Ausgestaltung der Erfindung ist vorgesehen, dass an dem kastenförmigen Gehäuse eine oder mehrere Absaugvorrichtungen vorgesehen sind, die das im Container befindliche frei verfügbare Gas absaugen.

Nach einer weiteren Ausgestaltung der Erfindung ist vorgesehen, dass an dem Gehäuse eine oder mehrere blasende Belüftungsvorrichtungen vorgesehen sind, mittels der das Containerinnere belüftbar und/oder mit einem anderen Gas füllbar ist.

Die Absaugvorrichtung und die Belüftungsvorrichtung vollziehen den Gasaustausch.

Nach einer weiteren Ausgestaltung der Erfindung ist vorgesehen, dass die motorisch angetriebenen Öffnungsvorrichtungen die Türverschlussstangen der Containertüren drehen, bis die Excenterhaken die Türen entriegelt haben und dann die zum Öffnen freigegebenen Türen in die Offenstellungen schwenken.

Nach einer weiteren Ausgestaltung der Erfindung ist vorgesehen dass die motorisch angetriebenen Öffnungsvorrichtungen die Containertüren nach dem Öffnen und gegebenenfalls nach einem Gasaustausch wieder schließen und auch die Türverschlussstangen der Containertüren drehen bis die Excenterhaken die Türen wieder verriegelt haben.

Nach einer weiteren Ausgestaltung der Erfindung ist vorgesehen, dass die Öffnungsvorrichtungen Verriegelungszangen aufweisen, die die Türverschlussstangen zum Verdrehen erfassen.

Nach einer weiteren Ausgestaltung der Erfindung ist vorgesehen, dass die Verriegelungszangen und deren Betätigungsvorrichtungen paarweise für die rechte und die linke Tür an Verschiebeleisten so verschieblich angeordnet sind, dass sie bei unterschiedlichen Stangenabständen an die unterschiedliche Plazierung der Türverschlussstangen anpassbar sind. Auf den Verschiebeleisten sind die Öffnungsvorrichtungen für die Türverschlussstangen also an die variablen Abstände der Türverschlussstangen einfach durch Verschieben anpassbar. Dieses Anpassen kann von einer Bedienungsperson vorgenommen werden noch vor dem Beginn des Türöffnens.

Die Türöffnungsstangen werden bei einigen Containern durch Linksdrehen und bei einigen Containern durch Rechtsdrehen in die Öffnungsposition gebracht. Nach einer weiteren Ausgestaltung der Erfindung ist deshalb vorgesehen, dass die Öffnungsvorrichtungen die Türverschlussstangen beim Öffnen je nach Bedarf rechtsherum oder linksherum verdrehen.

Nach einer weiteren Ausgestaltung der Erfindung ist vorgesehen, dass die Verschiebeleisten der Verriegelungszangen an horizontal verfahrbaren Mitnehmern so angreifen, dass beim Verfahren der Mitnehmer die Containertüren geöffnet und/oder wieder geschlossen werden.

Nach einer weiteren Ausgestaltung der Erfindung ist vorgesehen, dass ein trichterförmiger Absaugkasten der Absaugvorrichtung nach dem Öffnen der Containertüren in den Innenraum des Gehäuses schwenkt, wobei seine Trichteröffnung auf den Container-Innenraum gerichtet ist.

Nach einer weiteren Ausgestaltung der Erfindung ist vorgesehen, dass die Vorrichtung zum Ändern der Zusammensetzung des sich im Innenraum eines Containers befindlichen, frei verfügbaren Gasvolumens bei noch geschlossenen Container-Türen dichtend an den Container angesetzt wird, dass die Container-Türen in den gasdichten und gasdicht an den Container anschließenden Gehäuse-Innenraum der Vorrichtung mechanisch selbsttätig geöffnet werden und dass mittels Gas-Austauschvorrichtungen, die durch den Gehäuse-Innenraum in den Container hinein wirken, frei verfügbares Gasvolumen im Container in seiner Zusammensetzung verändert wird.

Nach einer weiteren Ausgestaltung der Erfindung ist vorgesehen, dass ungewünschtes Gas aus dem Container abgesaugt wird.

Nach einer weiteren Ausgestaltung der Erfindung ist vorgesehen, dass gewünschtes Gas in den Container eingeblasen wird.

Das Prinzip des Verfahrens zum Ändern der Zusammensetzung des frei im Container verfügbaren Gasvolumens besteht also darin, dass nach einem Heranfahren der Vorrichtung an den noch geschlossenen Container, vorzugsweise selbsttätig, die Containertüren geöffnet werden und aus dem nun großflächig zum Vorrichtungsinnenraum offenen Container eine großvolumige Absaugung eines ungewünschten, vielleicht giftigen Gases stattfindet. Eine Beschleunigung des Gasaustausches kann durch das gleichzeitige Einblasen von neutraler Luft, beispielsweise Frischluft, erfolgen.

In weiterer Ausgestaltung des Verfahrens nach der Erfindung ist vorgesehen, dass die Containertüren nach dem Gasaustausch wieder mechanisch selbsttätig geschlossen werden. Dies ist vor allem vorgesehen, wenn durch das großvolumige Einblasen giftige Gase in den Container eingeblasen worden sind.

### Die Erfindung wird anhand der Zeichnungen näher erläutert. Es zeigen:

Fig. 1 eine Vorrichtung zum Ändern der Zusammensetzung des Gasvolumens im Inneren eines Containers, das an einen Container bei geschlossenen Türen angesetzt ist,
Fig. 2 einen Schnitt durch die an den Container angesetzte Vorrichtung längs der Linie II-II nach Fig. 1,
Fig. 3 eine schaubildliche Darstellung des an den Container angesetzten Vorrichtung, wobei eine Seitenwand und die Deckenwand der Vorrichtung entfernt sind, um bessere Einsicht in die Vorrichtung zu gewähren,
Fig.4 eine schaubildliche Darstellung der Vorrichtung von der Seite des Ansetztores her gesehen mit der Öffnungsvorrichtung für die Containertüren und Dichtung zur gasdichten Abdichtung zwischen der Vorrichtung und dem Container,
Fig. 5 einen vergrößerten Ausschnitt eines Teiles der Öffnungsvorrichtung, mit dem die Türverschlussstangen einer Tür in die Öffnungsstellung drehbar sind,
Fig.6 eine Draufsicht auf die Vorrichtung mit einer Darstellung der vertikalen Dichtungen zum Container, mit der Vorrichtung für das Absaugen unerwünschter Gase aus dem Inneren des Containers und Vorrichtungen zum Einblasen von Gas, beispielsweise Frischluft oder anderen gewünschten Gasen, in den Container,
Fig. 7 und Fig. 8 vergrößerte Darstellungen VII und VIII der vertikalen Dichtungen zum Container nach Fig. 6,
Fig. 9 eine schaubildliche Darstellung der Vorrichtung bei Weglassung des Containers aber mit den geöffneten Containertüren,
Fig. 10 eine Seitenansicht der Vorrichtung mit dem Container bei Weglassung der vorderen Seitenwand der Vorrichtung bei geöffneten Türen und mit Andockriegeln zum Festlegen der Vorrichtung am Container,
Fig. 11 eine vergrößerte Darstellung XI des Andockriegels in dem Eckbeschlag des Containers.

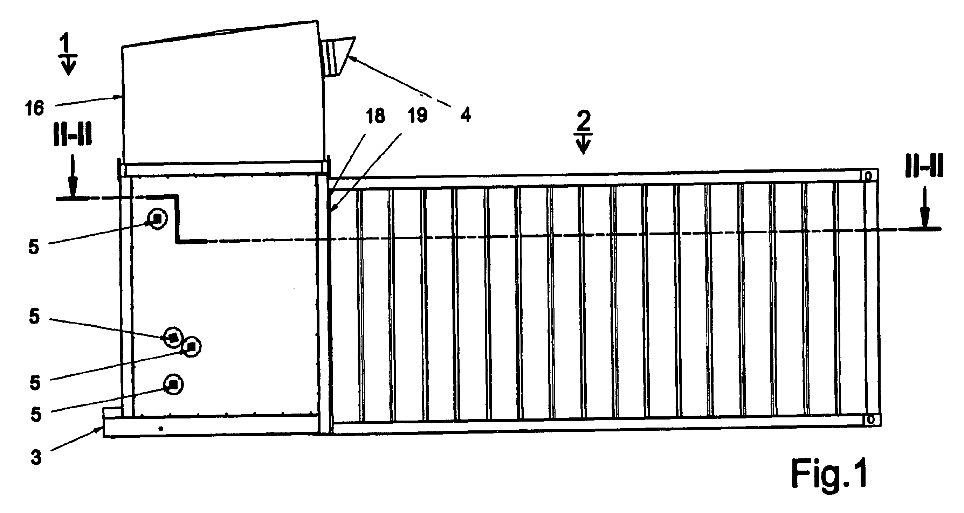

Fig. 1 zeigt eine Vorrichtung zum Ändern der Gaszusammensetzung des sich im Innenraum 6 eines Containers 2 befindlichen, frei verfügbaren Gasvolumens.

Dieses frei verfügbare Gasvolumen ist das Gas, welches die Räume des Containers füllt, die nicht durch irgendwelche Güter, wie Paletten mit Kartons, Kisten und anderem Stückgut gefüllt sind. Vor allem in den Tropen können sich in den Container 2 Ungeziefer, wie Spinnen, Schlangen, Käfer, Ratten, Mäuse oder dergleichen oder auch Viren, Sporen oder Bakterien eingeschlichen haben. Die Einfuhr von solchen unerwünschten "Gästen" ist gefährlich. Deshalb werden die frei verfügbaren Räume in solchen Containern mit giftigen, konservierenden bzw. desinfizierenden Gasen gefüllt, die während des Transportes diese unerwünschten Gäste töten. Solche giftigen Begasungsstoffe sind beispielweise Formaldehyd, Phosphorwasserstoff, Blausäure, Methylbromid und Ammoniak.
Die Einbringung solcher Begasungsstoffe und das Entfernen bringen Gefahren für das Personal mit sich, das beim Begasen und dem Entfernen des Gases diese Stoffe handhabt. Mit Hilfe der Vorrichtung nach der Erfindung werden diese Gefahren sowohl beim Entgasen als auch beim Begasen eliminiert.

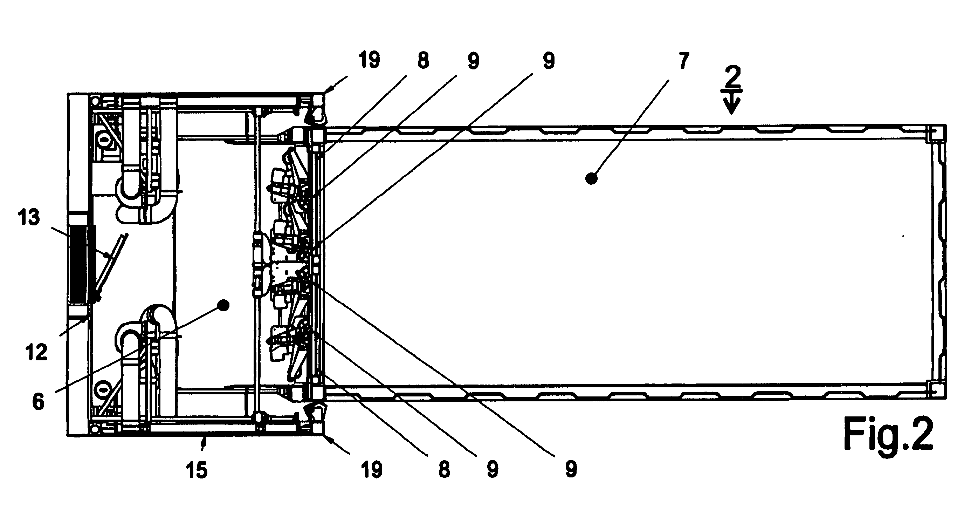

Die Vorrichtung 1 ist nach einer Ausführungsform als mit separaten Höhenniveau verstellbaren Fahrrollen 39 als selbständige Einheit geschaffen, die entweder selbst oder auf einem Niveau-Trailer verfahrbar oder verrollbar ist oder beispielweise mit einem nicht dargestellten Gabelstapler an einen Container 2 herangefahren wird, der beispielsweise nach dem Beladen mit Transportgut mit einem geeigneten, beispielsweise für Ungeziefer tödlichen Gas begast wurde. Dieses Gas muss vor dem Entladen oder einer Inspektion des Containerinhalts, z.B. durch den Zoll, entfernt werden. Der Gabelstapler kann dazu beispielsweise in Schienen 3 der Vorrichtung eingreifen. Die Vorrichtung 1 weist an seinem Gehäuse 1a mindestens eine Absaugvorrichtung 4 auf, die Gas aus dem Innenraum 6 (Fig. 2) der Vorrichtung 1 absaugen kann, und Belüftungsvorrichtungen 5, mittels der Gas in den Innenraum 6 der Vorrichtung einblasbar ist. Der Innenraum 6 der Vorrichtung ist nur ein Übergaberaum für den Gasaustausch mit dem Innenraum 7 des Containers 2.

Fig. 2 zeigt einen Schnitt durch die Vorrichtung 1 und den Container 2 längs der Linie II-II nach Fig. 1. Man erkennt, dass die Türen 8 des Containers 2 geschlossen sind. Vor den Türen 8 befinden sich Öffnungsvorrichtungen 9, die an Verschiebeleisten 10 verschieblich sind. Der Container 2 hat je Containertür 8 zwei Türverschlussstangen 21. Jede Öffnungsvorrichtung 9 arbeitet mit einer Türverschlussstange 21 zusammen.

Die Verschiebeleisten 10 sind mit den von ihnen geführten Öffnungsvorrichtungen 9 aus Platzgründen auf unterschiedlichen Höhen angeordnet. Die Verschiebeleisten 10 greifen an Mitnehmern 11 an und sind mittels der auf horizontalen Spindeln 11a verfahrbaren Mitnehmer 11 zur rückwärtigen Abschlusswand 12 verfahrbar, wobei die Verschiebeleisten 10 die Containertüren 8 mitnehmen und öffnen. Dies wird später beschrieben.

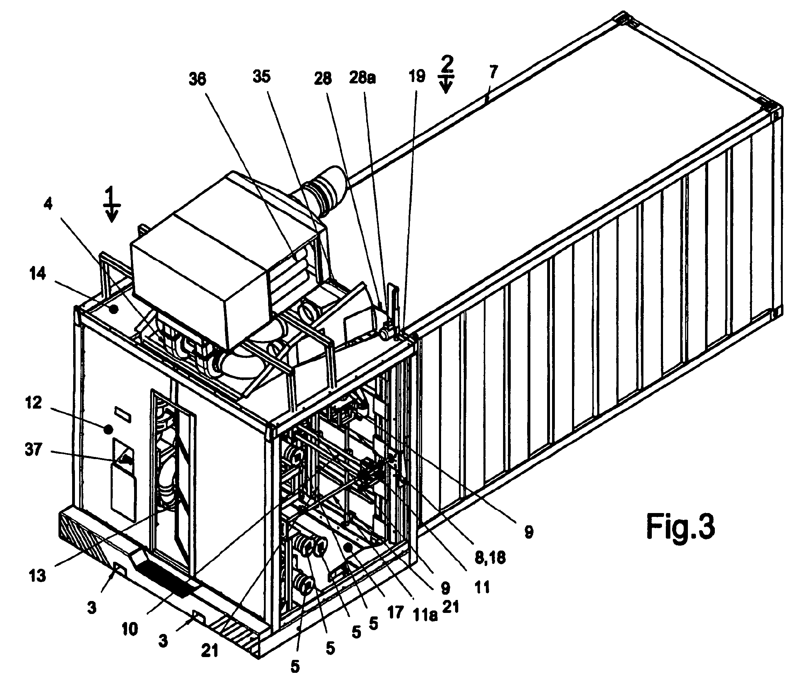

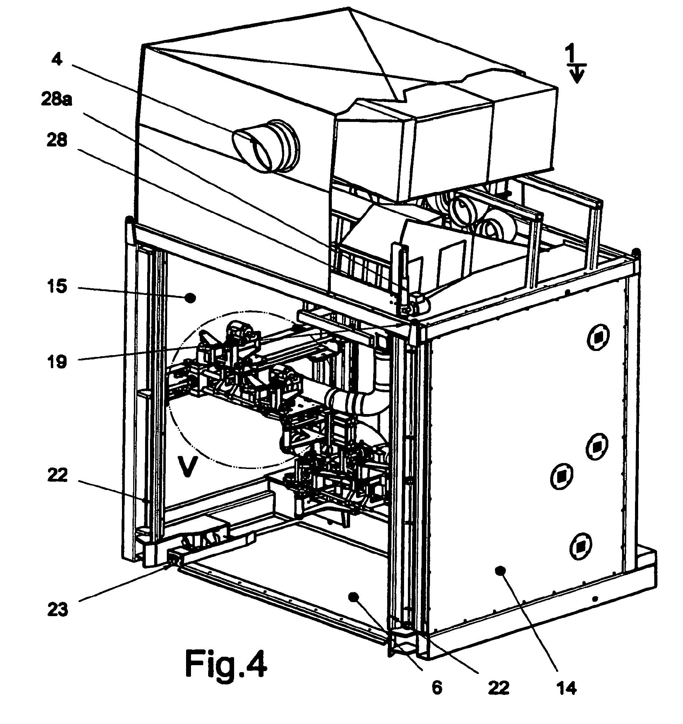

In Fig. 3 ist die an den Container 2 angedockte Vorrichtung 1 bei noch geschlossenen Containertüren 8 schaubildlich dargestellt. Man erkennt, dass sich in der rückwärtigen Abschlusswand 12 eine Einstiegstür 13 befindet. Die Vorrichtung 1 ist kastenförmig und hat zwei Seitenwände 14 und 15, von denen die Seitenwand 15 in der Zeichnung zum besseren Verständnis entfernt ist. Weiterhin hat die Vorrichtung 1 eine Deckenwand 16, die ebenfalls zum besseren Verständnis in Fig. 3 ebenfalls entfernt ist und sichtbar sind Schwebstofffilter 35 und Aktivkohlefilter 36. Eine Bodenwand 17 und ein zur Containertürwand 18 hin offenes Ansetztor 19, das besonders aus Fig. 4 gut zu erkennen ist. Fig. 3 zeigt die geschlossenen Containertüren 8 vor der Containertürwand 18. Die Containertüren 8 sind mit je zwei vertikal angeordneten Türverschlusstangen 21 versehen, die die Türen 8 bei geschlossenen Türen 8 mit nicht dargestellten Exzenterhaken an der Containertürwand verriegeln. Die Öffnungsvorrichtungen 9 sind an den Verschiebeleisten 10 verschiebbar zu erkennen. Ebenso ist zu erkennen, wie die Verschiebeleisten 10 von den Mitnehmern 11 und mittels der horizontalen Spindeln 11a horizontal verfahrbar sind. An der Abschlusswand ist das Bedienungsterminal 37 integriert.

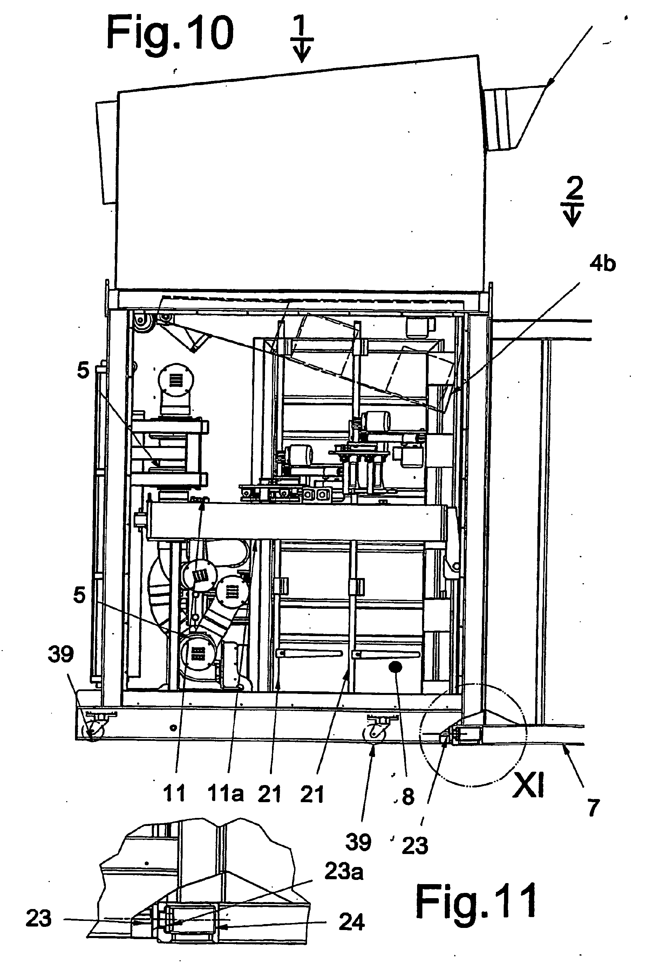

Fig. 4 zeigt die Vorrichtung 1 schaubildlich von der Seite des Ansetztores 19 her gesehen, mit dem die Vorrichtung 1 an den Container 2 mit seitlichen Ansetzdichtungsstreifen 22 und einem oberen Aufsetzdichtstreifen 28 gasdicht ansetzbar ist. Das Ansetztor 19 erstreckt sich dabei um die zu öffnenden Containertüren 8 der Containertürwand 18 herum. Es sind Verriegelungsbolzen 23 vorgesehen, die in die Containereckbeschläge 24 eingreifen und durch ein Verdrehen der Bolzenköpfe 23a den Container 2 mit der Vorrichtung 1 verbinden (Fig. 11).Die Dichtungen 22 und 28 sorgen dabei für einen gasdichten Anschluss.

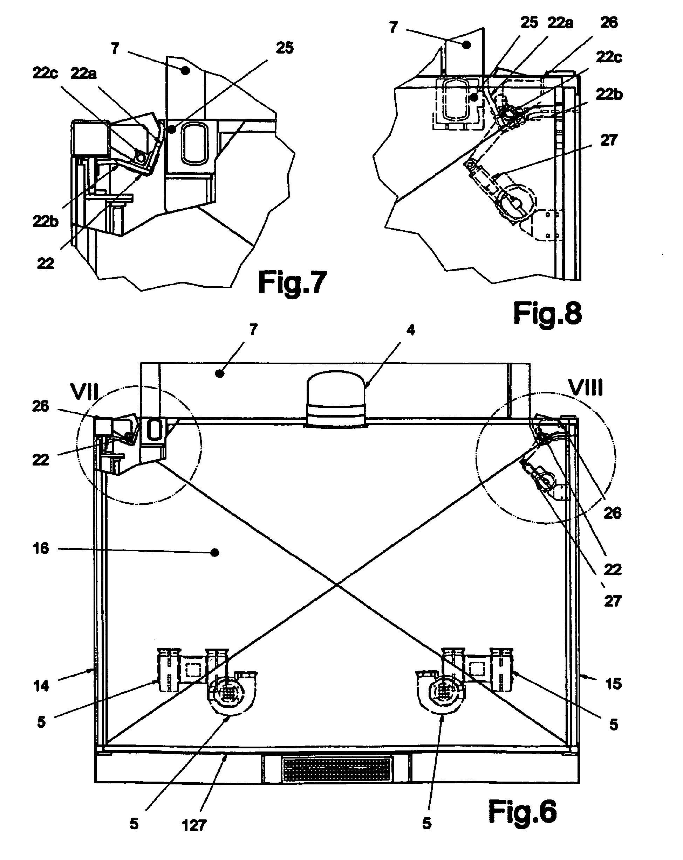

In den Figuren 6 bis 8 ist der Dichtungsaufbau der seitlichen Ansetzdichtungsstreifen 22 gezeigt, wobei die Fig. 7 eine Vergrößerung des Ausschnittes VII nach Fig.6 und Fig.8 eine Vergrößerung des Ausschnittes VIII nach Fig. 6 ist. Die Vorrichtung 1 ist an die Containertürwand 18 angesetzt. Man erkennt, dass die Vorrichtung breiter ist als der Container 2 und die Vorrichtung 1 damit etwas über das Containerende mit der Türwand 18 geschoben ist. Die Eckpfosten 25 des Containers 2 befinden sich zwischen den Eckpfosten 26 der Vorrichtung 1, Die vertikal verlaufenden Ansetzdichtungsstreifen 22 haben eine im Schnitt etwas V-förmige Gestalt mit flexiblen Streifenteilen 22a und 22b; sie sind um vertikale Stützstangen 22c, an denen sie im Bereich des V-Knickes befestigt sind, verschwenkbar. Die Stützstangen 22c sind von Stellzylindem 27 drehbar. Ist der Container 2 an die Vorrichtung 1 angesetzt, dann schwenken die Zylinder 27 die Ansetzdichtungsstreifen 22 so, dass sich die Streifenteile 22a von außen an die Eckpfosten 25 anlegen. Die Streifenteile 22b legen sich an die Eckpfosten 26 der Vorrichtung an, Damit ist die seitliche Abdichtung erfolgt. Von oben wird mittels Stellgliedern 28a gegen den oberen Querträger des Containers 2 ein an der Deckenwand 16 angeordneter Aufsetzdichtungstreifen 28 gefahren, Am Boden ist eine nicht dargestellte Schleifdichtung vorgesehen. Der gasdichte Anschluss der Vorrichtung 1 an den Container ist damit vollzogen.

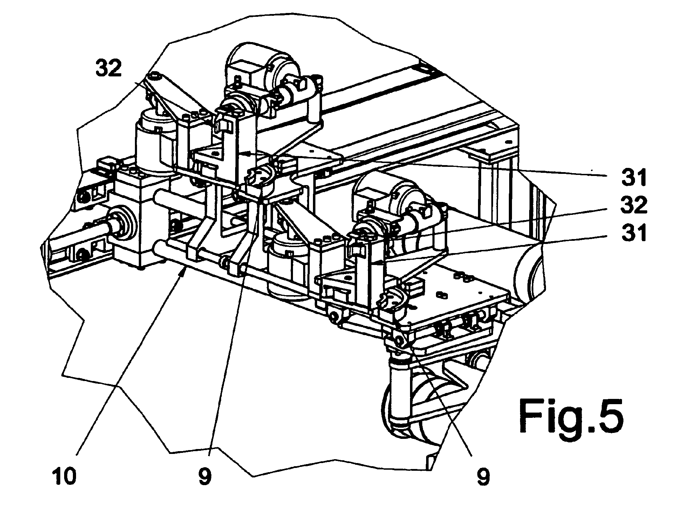

In Fig. 4 sind im Innenraum 6 der Vorrichtung 1 die Verschiebeleisten 10 für die Öffnungsvorrichtungen 9 zu erkennen. Für jede Türverschlussstange 21 ist eine eigene Öffnungsvorrichtungen 9 vorgesehen. Da die Türöffnungsstangen 21 unterschiedliche Abstände haben, sind die Türöffnungsvorrichtungen 9 von Hand individuell auf die Türöffnungsstangen 21 einstellbar. Da die Türöffnungsvorrichtungen 9 relativ viel Raum benötigen, sind jeweils zwei Vorrichtungen 9 auf ihrer Verschiebeleiste 10 auf unterschiedlichen Höhen angeordnet. Der Ausschnitt V nach Fig, 4 ist in Fig. 5 vergrößert dargestellt. Die Türöffnungsvorrichtungen 9 haben jeweils einen Amboss 31, der sich gegen die jeweilige Türöffnungsstange 21 legt. Danach wird eine Zange 32 gegen die Türöffnungsstange 21 gefahren und diese damit fest umklammert. Im Arbeitsablauf betritt die Bedienungsperson bei noch geschlossenen Containertüren 8 durch die Tür 13 den Innenraum 6 der Vorrichtung. Zunächst öffnet sie die nicht dargestellten Verriegelungslaschen der Türöffnungsstangen 21; sie stellt die Türöffnungsvorrichtungen 9 von Hand auf die Türöffnungstangen 21 ein. Die Containertüren 8 sind noch geschlossen. Nun verlässt die Bedienungsperson den Innenraum 6 der Vorrichtung 1.

Die Türöffnungsvorrichtungen 9 drehen nun ferngesteuert, ggf. monitorüberwacht, also selbsttätig betrieben, die Türöffnungstangen 21 in der notwendigen Drehrichtung, also nach rechts oder nach links, entsprechend der vorliegenden Containerausbildung.

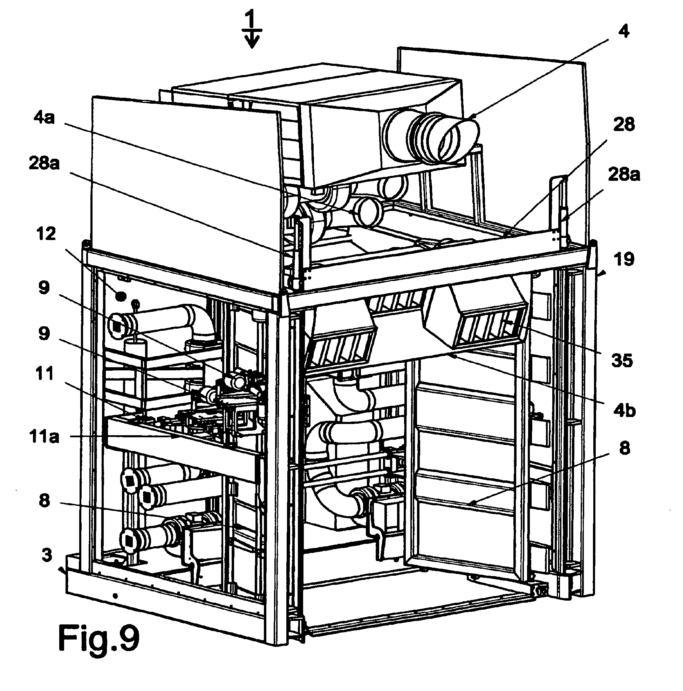

Sind die Toröffnungsstangen 21 entriegelt, dann werden die Containertüren 8 geöffnet. Fig. 9 und 10 zeigen, dass die Spindeln 11a durch Drehen die Mitnehmer 11 in Richtung auf die hintere Abschlusswand verfahren haben. Dabei haben sie die Verschiebeleisten 10 mitgenommen. Die auf den Verschiebeleisten 10 sitzenden Öffnungsvorrichtungen 9 haben die von ihnen festgehaltenen Türöffnungsstangen 21 und mit diesen die Containertüren 8 mitgenommen und geöffnet. Damit ist der Container 2 zum Innenraum 6 der Vorrichtung voll geöffnet.

Die Absaugvorrichtung 4 hat einen Absaugkanal 4a, der von oben in den Innenraum 6 der Vorrichtung 1 hineingeschwenkt wird, wenn die Containertüren 8 geöffnet sind. Die Trichteröffnung 4b dieses Absaugkanals 4a ist auf den Containerinnenraum 7 gerichtet.

Die Vorrichtung 1 dient vorzugsweise einem Entgasen von Containern 1, deren frei verfügbares Gasvolumen beim Transport im beladenen Zustand mit einem giftigen Gas angefüllt ist, welches gesundheitsschädlich ist. Beim Einsatz der Vorrichtung 1 wird folgendes Arbeitsverfahren durchgeführt:

Zunächst wird die Vorrichtung 1 an den gewünschten Container 2 mittels eines Gabelstaplers herangefahren. Nun muss die Vorrichtung 1 erst einmal mit dem Container 2 verbunden werden. Dazu werden die Verriegelungsbolzen 23, die in die Containereckbeschläge 24 eingefahren sind, verdreht, sodass die Bolzenköpfe 23a in den Containereckbeschlägen 24 festsitzen. Die Vorrichtung 1 ist nun auch gegenüber dem Container 2 fixiert. Die seitlichen Ansetzdichtungsstreifen 22 werden nun von den Zylindern 27 so verstellt, dass sich die Streifenteile 22a von außen an die Eckpfosten 25 anlegen. Die Streifenteile 22b legen sich an die Eckpfosten 26 der Vorrichtung 1 an. Damit ist die seitliche Abdichtung erfolgt. Von oben wird mittels Stellgliedern 28a der Aufsetzdichtungsstreifen 28 gegen den oberen Querträger des Containers 2 gefahren. Am Boden ist eine nicht dargestellte Schleifdichtung vorgesehen. Der gasdichte Anschluss der Vorrichtung 1 an den Container 2 ist damit vollzogen.

Nun tritt die Bedienungsperson in den Innenraum 6 der Vorrichtung bei noch geschlossenen Containertüren 8 ein. Die Bedienungsperson schiebt die Öffnungsvorrichtungen 9 zum Ergreifen der Türöffnungsstangen 21 in die richtige Position und lässt die Öffnungsvorrichtung 9 mittels der Bedienungsschalter 38 die Türöffnungsstangen 21 erfassen. Danach öffnet die Bedienungsperson die Sicherungslaschen der Türöffnungsstangen 21. Dann verlässt die Bedienungsperson wieder das Innere 6 der Vorrichtung 1. Nun werden maschinell die Türöffnungsstangen 21 gedreht, um diese zu entriegeln, Dann fahren die Verschiebeleisten 10 nach hinten und schwenken dabei die Containertüren 8 auf. Schon während des Öffnens der Containertüren 8 beginnt die Absaugung der unerwünschten Gase aus dem Container 2. In Kombination damit werden die Belüftungsvorrichtungen 5 eingeschaltet, die das Containerinnere 7 mit vorzugsweise frischer Luft auffüllen. Die Bedienungsperson kommt mit den gesundheitsschädlichen Gasen überhaupt nicht in Berührung. Das abgesaugte unerwünschte, gegebenenfalls vergiftete Gas wird vor dem Einleiten in die Atmosphäre vorzugsweise in einem Filter gereinigt.

Die Vorrichtung 1 und das Verfahren zum Ändern der Zusammensetzung des in einem Container 2 frei verfügbaren Gasvolumens ist ungekehrt auch zum Begasen mit giftigen Gasen geeignet. Die Vorrichtung 1 ist unverändert. Das Verfahren zum Ändern der Gaszusammensetzung ändert sich nur in sofern, dass die Containertüren (8) nach dem Begasen wieder automatisch ferngesteuert geschlossen werden. Nach dem Schließen soll der Gehäuse-Innenraum 6 durch kurzes Absaugen von schädlichen Gasen befreit werden, bevor eine Bedienungsperson eintreten darf.

## Patentansprüche

1. Vorrichtung zum Ändern der Zusammensetzung des sich im Innenraum (6) eines Containers (2) befindlichen beweglichen Gasvolumens, wobei die Vorrichtung (1) mit einer Öffnung (19) ihres Gehäuses (1a), die sich beim Ansetzen an den Container (2) um zumindest eine zu öffnende Tür (8) der Containertürwand (18) herum erstreckt, dichtend an den Container (2) ansetzbar ist und das an den Gehäuse-Innenraum (6) Gas-Austauschvorrichtungen (4,5) zum Austausch des Gasvolumen im Container (1) angeschlossen sind, mittels der die Zusammensetzung des Gasvolumens im Container (2) veränderbar ist,
**dadurch gekennzeichnet, dass**
das Gehäuse (1a) Öffnungsvorrichtungen (9) im Inneren des im Wesentlichen gasdicht verschließbaren Gehäuse-Innenraum (6) für ein Öffnen und/oder Schließen der zumindest einen Tür (8) des Containers (2) aufweist.

2. Vorrichtung nach Anspruch 1, **dadurch gekennzeichnet, dass** die Gas-Austauschvorrichtungen (4,5) für das im Container (2) befindliche, frei verfügbare Gasvolumen aus mindestens einer Absauge (4) - und mindestens einer Belüftungs (5) -Vorrichtung bestehen.

3. Vorrichtung nach einem oder mehreren der vorhergehenden Ansprüche, **dadurch gekennzeichnet, dass** das Gehäuse (1a) mit Seitenwänden (14,15), einer Deckenwand (16), einer Bodenwand(17), einer rückwärtigen Abschlusswand (12) und einem zur Containertürwand (18) hin offenen Ansetztor (19) ausgebildet ist, mit dem die Vorrichtung (1) an den Container (2) mit einer Ansetzdichtung (22, 28) gasdicht ansetzbar ist.

4. Vorrichtung nach einem oder mehreren der vorhergehenden Ansprüche, weiterhin **gekennzeichnet durch** eines oder mehrere der folgenden Merkmale:
a) die Ansetzdichtungsstreifen (22) der Vorrichtung (1) zum Abdichten sind seitlich gegen die Eckpfosten (25) des Containers(2) zwischen den oberen und unteren Eckbeschlägen (24) drückbar;
b) ein Aufsetzdichtungsstreifen (28) zum deckenseitigen Abdichten ist von oben gegen den Dachquerträger drückbar;
c) die Öffnungsvorrichtungen (9) für die Türen (8) an die Türwand (18) mit den noch geschlossenen Türen (8) so heranführbar sind, dass die Türen (8) nach dem Drehen der Türverschlussstangen (21) in die Offenposition von Stellmechanismen (11,11a) erfassbar und aufschwenkbar sind;
d) die Öffnungsvorrichtungen (9) für die Türen (8) an die Türwand (18) mit den noch geschlossenen Türen (8) so heranführbar sind, dass mit den Öffnungsvorrichtungen (9) die Türverschlussstangen (21) **durch** maschinelles Drehen automatisch in die Offenposition drehbar sind, und dass die Türen (8) nach dem Drehen der Türverschlussstangen (21) in die Offenposition von Stellmechanismen (11,11a) der Öffnungsvorrichtungen (9) aufschwenkbar sind;
e) an dem Gehäuse (1 a) sind eine oder mehrere Absaugvorrichtungen (4) vorgesehen, die das im Container (2) befindliche frei verfügbare Gas absaugen;
f) an dem Gehäuse (1a) sind eine oder mehrere blasende Belüftungsvorrichtungen (5) vorgesehen sind, mittels der das Containerinnere (7) belüftbar ist oder mittels der das Containerinnere (7) belüftbar und mit einem anderen Gas füllbar ist;
g) die Öffnungsvorrichtungen (9) motorisch angetriebenen sind und die Türverschlussstangen (21) der Containertüren (8) drehen, bis die Excenterhaken die Türen (8) entriegelt haben und dann die zum Öffnen freigegebenen Türen (8) in die Offenstellungen schwenken;
h) die Öffnungsvorrichtungen (9) sind motorisch angetriebenen und die Türen (8) schließen nach dem Öffnen und gegebenenfalls nach einem Gasaustausch wieder und auch die Türverschlussstangen (21) der Containertüren (8) drehen bis die Excenterhaken die Türen wieder verriegelt haben.

5. Vorrichtung nach einem oder mehreren der vorhergehenden Ansprüche, **dadurch gekennzeichnet, dass** die Öffnungsvorrichtungen (9) Verriegelungszangen (32) aufweisen, die die Türverschlussstangen (21) zum Verdrehen erfassen.

6. Vorrichtung nach einem oder mehreren der vorhergehenden Ansprüche, **dadurch gekennzeichnet, dass** die Verriegelungszangen (32) und deren Öffnungsvorrichtungen (9) paarweise für die rechte und die linke Tür (8) an Verschiebeleisten (10) so verschieblich angeordnet sind, dass sie bei unterschiedlichen Stangenabständen an die unterschiedliche Platzierung der Türverschlussstangen (21) anpassbar sind.

7. Vorrichtung nach einem oder mehreren der vorhergehenden Ansprüche, **dadurch gekennzeichnet, dass** die Öffnungsvorrichtungen (9) die Türverschlussstangen (21) beim Öffnen je nach Bedarf rechtsherum oder linksherum verdrehen.

8. Vorrichtung nach einem oder mehreren der vorhergehenden Ansprüche, **dadurch gekennzeichnet, dass** die Verschiebeleisten (10) der Öffnungsvorrichtungen (9) an horizontal verfahrbaren Mitnehmern (11) so angreifen, dass beim Verfahren der Mitnehmer (11) die Containertüren (8) geöffnet und/oder wieder geschlossen werden.

9. Vorrichtung nach einem oder mehreren der vorhergehenden Ansprüche, **dadurch gekennzeichnet, dass** ein trichterförmiger Absaugkanal (4a) der Absaugvorrichtung (4) nach dem Öffnen der Containertüren (8) in den Innenraum (6) des Gehäuses (1 a) schwenkt, wobei seine Trichteröffnung auf den Container-Innenraum (7) gerichtet ist.

10. Verfahren zum Ändern der Zusammensetzung des sich im Innenraum (7) eines Containers (2) befindlichen, frei verfügbaren Gasvolumens mittels einer Vorrichtung, die bei noch geschlossenen Containertüren (8) dichtend an den Container (2) angesetzt wird, dass die Containertür oder die Containertüren (8) in den gasdichten und gasdicht an den Container (2) anschließenden Gehäuse-Innenraum (6) der Vorrichtung (1) geöffnet werden, insbesondere mechanisch selbsttätig, und dass mittels Gas-Austauschvorrichtungen (4,5), die durch den Gehäuse-Innenraum (6) in den Container hinein wirken, frei verfügbares Gasvolumen im Container (2) in seiner Zusammensetzung verändert wird.

11. Verfahren nach Anspruch 10, **dadurch gekennzeichnet, dass** die Containertüren (8) nach dem Gasaustausch wieder geschlossen werden, insbesondere mechanisch selbsttätig.

12. Verfahren nach Anspruch 10 und/oder 11, **dadurch gekennzeichnet, dass** ungewünschtes Gas aus dem Container (2) abgesaugt wird.

13. Verfahren nach einem oder mehreren der Ansprüche 10 bis 12, **dadurch gekennzeichnet, dass** gewünschtes Gas in den Container (2) eingeblasen wird.

14. Verfahren zum Ändern der Zusammensetzung des sich im Innenraum eines Containers (2) befindlichen, frei verfügbaren Gasvolumens nach Anspruch 10 mittels der Vorrichtung nach den Ansprüchen 1 bis 9.

15. Verfahren nach einem oder mehreren der Ansprüche 10 bis 14, **dadurch gekennzeichnet, dass** während des Betretens der Vorrichtung (1) durch eine Bedienperson und/oder während des Öffnen der Türen bzw. des Vorbereitens bzw. ganz oder teilweisen Öffnens der Türen durch die Bedienperson durch Belüftungsvorrichtungen (5) im Innenraum der Vorrichtung ein leichter Gasüberdruck an Frischluft oder durch gleichzeitiges Schalten der Absaugvorrichtungen (4) unterstützt ein stetiger Gasaustausch mit Frischluft im Inneren der Vorrichtung geschaffen wird.

## Claims

1. Device for altering the composition of the mobile gas volume located in the interior (6) of a container (2), wherein the device (1) can be placed in a sealing manner on the container (2) with an opening (19) of its housing (1a) which extends around at least one openable door (8) of the container door wall (18) during placement on the container (2) and that gas exchange devices (4, 5) are connected to the housing interior (6) for exchanging the gas volume in the container (1), by means of which the composition of the gas volume in the container (2) can be altered,
**characterised in that**
the housing (1a) has opening devices (9) in the interior of the housing interior (6), which can be closed in a substantially gastight manner, for an opening and/or closing of the at least one door (8) of the container (2).

2. The device according to claim 1, **characterised in that** the gas exchange devices (4, 5) for the freely available gas volume located in the container (2) consist of at least one extraction (4) and at least one ventilation (5) device.

3. The device according to one or more of the preceding claims, **characterised in that** the housing (1a) is configured with side walls (14, 15), a top wall (16), a bottom wall (17) a rearward terminating wall (12) and a placement door (19) open towards the container door wall (18) with which the device (1) can be placed in a gastight manner on the container (2) with a placement seal (22, 28).

4. The device according to one or more of the preceding claims, further **characterised by** one or more of the following features:
a) the placement sealing strips (22) of the device (1) for sealing can be pressed laterally against the corner posts (25) of the container (2) between the upper and lower corner fittings (24);
b) a placement sealing strip (28) for top-side sealing can be pressed from above against the roof cross member;
c) the opening devices (9) for the doors (8) can be brought towards the door wall (18) with the still-closed doors (8) so that after turning the door closing rods (21) into the open position, the doors (8) can be gripped by adjusting mechanisms (11, 11a) and swung open;
d) the opening devices (9) for the doors (8) can be brought towards the door wall (18) with the still-closed doors (8) so that with the opening devices (9) the door closing rods (21) can be turned automatically into the open position by mechanical turning and that after turning the door closing rods (21) into the open position, the doors (8) can be swung open by adjusting mechanisms (11, 11a) of the opening devices (9);
e) one or more extraction devices (4) are provided on the housing (1a), which extract the freely available gas located in the container (2);
f) one or more blowing ventilation devices (5) are provided on the housing (1a), by which means the container interior (7) can be ventilated or by which means the container interior (7) can be ventilated and can be filled with another gas;
g) the opening devices (9) are motor-driven and turn the door closing rods (21) of the container doors (8) until the eccentric hooks have unlocked the doors (8) and the doors (8) then released for opening pivot into the open positions;
h) the opening devices (9) are motor-driven and close the doors (8) again after opening and possibly after a gas exchange and also turn the door closing rods (21) of the container doors (8) until the eccentric hooks have locked the doors again.

5. The device according to one or more of the preceding claims, **characterised in that** the opening devices (9) comprise locking tongs (32) which grip the door closing rods (21) for turning.

6. The device according to one or more of the preceding claims, **characterised in that** the locking tongs (32) and their opening devices (9) are arranged displaceably in pairs for the right and the left door (8) on displacement strips (10) so that they can be adapted to the different placement of the door closing rods (21) with different rod spacings.

7. The device according to one or more of the preceding claims, **characterised in that** the opening devices (9) turn the door closing rods (21) clockwise or anticlockwise on opening as required.

8. The device according to one or more of the preceding claims, **characterised in that** the displacement strips (10) of the opening devices (9) act on horizontally movable entrainers (11) so that during movement of the entrainers (11) the container doors (8) are opened and/or closed again.

9. The device according to one or more of the preceding claims, **characterised in that** a funnel-shaped extraction channel (4a) of the extraction device (4) pivots into the interior (6) of the housing (1 a) after opening the container doors (8), wherein its funnel opening is directed onto the container interior (7).

10. Method for altering the composition of the freely available gas volume located in the interior (7) of a container (2) by means of a device which is placed in a sealing manner on the container (2) when the container doors (8) are still closed so that the container door or the container doors (8) are opened into the housing interior (6) of the device (1) which is gastight and which adjoins the container (2) in a gastight manner, in particular mechanically automatically and that by means of gas exchange devices (4, 5) which act in the container through the housing interior (6), the freely available gas volume in the container (2) is altered in its composition.

11. The method according to claim 10, **characterised in that** the container doors (8) are closed again after the gas exchange, in particular mechanically automatically.

12. The method according to claim 10 and/or 11, **characterised in that** undesired gas is extracted from the container (2).

13. The method according to one or more of claims 10 to 12, **characterised in that** desired gas is blown into the container (2).

14. Method for altering the composition of the freely available gas volume located in the interior of a container (2) according to claim 10 by means of the device according to claims 1 to 9.

15. The method according to one or more of claims 10 to 14, **characterised in that** when the device (1) is accessed by an operator and/or during opening of the doors or preparation or complete or partial opening of the doors by the operator, a slight gas excess pressure of fresh air is created by ventilation devices (5) in the interior of the device or assisted by simultaneously switching the extraction devices (4) a continuous exchange of gas with fresh air is created inside the device.

## Revendications

1. Dispositif de modification de la composition du volume de gaz mobile se trouvant dans l'espace intérieur (6) d'un conteneur (2), où le dispositif (1) peut être placé de manière étanche contre le conteneur (2) avec une ouverture (19) de son logement (1a) enserrant au moins une porte (8), destinée à être ouverte, de la paroi de porte du conteneur (18) lors du placement contre le conteneur (2), et où des dispositifs d'échange de gaz (4, 5), au moyen desquels la composition du volume de gaz dans le conteneur (2) peut être modifiée, sont reliés à l'espace intérieur du logement (6) pour l'échange du volume de gaz dans le conteneur (1),
**caractérisé en ce que** le logement (1a) présente des systèmes d'ouverture (9) au sein de l'espace intérieur du logement (6) pouvant être fermé sensiblement de manière étanche aux gaz, pour une ouverture et/ou une fermeture de la au moins une porte (8) du conteneur (2).

2. Dispositif selon la revendication 1, **caractérisé en ce que** les dispositifs d'échange de gaz (4, 5) pour le volume de gaz librement disponible se trouvant dans le conteneur (2) se composent d'au moins un système d'aspiration (4) et d'au moins un système d'aération (5).

3. Dispositif selon l'une ou plusieurs des revendications précédentes, **caractérisé en ce que** le logement (1a) est conçu avec des parois latérales (14, 15), une paroi de toit (16), une paroi de sol (17), une paroi de fermeture située à l'arrière (12) et une porte d'accostage (19) ouverte sur la paroi de porte du conteneur (18), grâce à laquelle le dispositif (1) peut être placé contre le conteneur (2) de manière étanche aux gaz avec un joint d'accostage (22, 28).

4. Dispositif selon l'une ou plusieurs des revendications précédentes, également **caractérisé par** l'une ou plusieurs des caractéristiques suivantes :
a) les bandes d'étanchéité d'accostage (22) du dispositif (1) destinées à l'étanchéité sont compressibles latéralement contre les poteaux corniers (25) du conteneur (2) entre les ferrures de coin (24) supérieures et inférieures ;
b) une bande d'étanchéité de pose (28) destinée à l'étanchéité côté toit est compressible depuis le haut contre la poutre de toit ;
c) les systèmes d'ouverture (9) pour les portes (8) peuvent être rapprochés de la paroi de porte (18) avec les portes encore fermées (8) de sorte que les portes (8) puissent être saisies et pivotées par des mécanismes de déplacement (11, 11a) en position ouverte après la rotation des crémones (21) ;
d) les systèmes d'ouverture (9) pour les portes (8) peuvent être rapprochés de la paroi de porte (18) avec les portes encore fermées (8) de sorte que les crémones (21) puissent être tournées automatiquement en position ouverte avec les systèmes d'ouverture (9) par rotation automatique et de sorte que les portes (8) puissent être pivotées en position ouverte par des mécanismes de déplacement (11, 11a) des systèmes d'ouverture (9) après la rotation des crémones (21) ;
e) un ou plusieurs systèmes d'aspiration (4), qui aspirent le gaz librement disponible se trouvant dans le conteneur (2), sont prévus dans le logement (1a) ;
f) un ou plusieurs systèmes d'aération (5) soufflant, au moyen desquels l'intérieur du conteneur (7) peut être aéré ou au moyen desquels l'intérieur du conteneur (7) peut être aéré et rempli d'un autre gaz, sont prévus sur le logement (1a) ;
g) les systèmes d'ouverture (9) sont entraînés par un moteur et font tourner les crémones (21) des portes du conteneur (8) jusqu'à ce que les crochets excentrés aient déverrouillé les portes (8) et font ensuite pivoter en position ouverte les portes (8) dégagées pour l'ouverture ;
h) les systèmes d'ouverture (9) sont entraînés par un moteur et referment les portes (8) après l'ouverture et le cas échéant, après un échange de gaz, et font tourner aussi les crémones (21) des portes de conteneur (8) jusqu'à ce que les crochets excentrés aient déverrouillé les portes.

5. Dispositif selon l'une ou plusieurs des revendications précédentes, **caractérisé en ce que** les systèmes d'ouverture (9) présentent des pinces de verrouillage (32) qui saisissent les crémones (21) pour les faire tourner.

6. Dispositif selon l'une ou plusieurs des revendications précédentes, **caractérisé en ce que** les pinces de verrouillage (32) et leurs systèmes d'ouverture (9) sont disposés pour être coulissables par paire pour la porte droite et la porte gauche (8) sur des montants de coulissage (10) de manière à s'adapter au différent placement des crémones (21) en cas de distances entre les crémones différentes.

7. Dispositif selon l'une ou plusieurs des revendications précédentes, **caractérisé en ce que** les systèmes d'ouverture (9) font tourner les crémones (21) lors de l'ouverture, en fonction des besoins, vers la droite ou vers la gauche.

8. Dispositif selon l'une ou plusieurs des revendications précédentes, **caractérisé en ce que** les montants de coulissage (10) des systèmes d'ouverture (9) sont en prise avec des galets d'entraînement (11) déplaçables à l'horizontale de sorte que, lors du déplacement des galets d'entraînement (11), les portes du conteneur (8) s'ouvrent et/ou se referment.

9. Dispositif selon l'une ou plusieurs des revendications précédentes, **caractérisé en ce qu'**un canal d'aspiration (4a) du système d'aspiration (4) ayant une forme d'entonnoir pivote, après l'ouverture des portes de conteneur (8) dans l'espace intérieur (6) du logement (1a), l'ouverture en entonnoir de celui-ci étant dirigée sur l'espace intérieur du conteneur (7).

10. Procédé de modification de la composition du volume de gaz librement disponible se trouvant dans l'espace intérieur (7) d'un conteneur (2) au moyen d'un dispositif qui est placé de manière étanche contre le conteneur (2), les portes du conteneur (8) encore fermées, **caractérisé en ce que** la porte du conteneur ou les portes du conteneur (8) s'ouvrent dans l'espace intérieur du logement (6) du dispositif (1) étanche aux gaz et se raccordant au conteneur (2) de manière étanche aux gaz, en particulier de manière mécaniquement automatique, et **en ce que** le volume de gaz librement disponible dans le conteneur (2) est modifié dans sa composition au moyen des dispositifs d'échange de gaz (4, 5) qui agissent dans le conteneur en traversant l'espace intérieur du logement (6).

11. Procédé selon la revendication 10, **caractérisé en ce que** les portes du conteneur (8) sont refermées après l'échange de gaz, en particulier de manière mécaniquement automatique.

12. Procédé selon la revendication 10 et/ou 11, **caractérisé en ce que** le gaz indésirable est aspiré hors du conteneur (2).

13. Procédé selon l'une ou plusieurs des revendications 10 à 12, **caractérisé en ce que** le gaz souhaité est insufflé dans le conteneur (2).

14. Procédé de modification de la composition du volume de gaz librement disponible se trouvant dans l'espace intérieur d'un conteneur (2) selon la revendication 10 au moyen d'un dispositif selon les revendications 1 à 9.

15. Procédé selon l'une ou plusieurs des revendications 10 à 14, **caractérisé en ce que**, lors de l'entrée dans le dispositif (1) d'un opérateur et/ou lors de l'ouverture des portes ou de la préparation ou de l'ouverture totale ou partielle des portes par l'opérateur, une légère surpression gazeuse d'air frais est créée dans l'espace intérieur du dispositif grâce aux systèmes d'aération (5) ou un échange gazeux constant avec l'air frais est créé dans l'intérieur du dispositif, assisté par la mise en marche simultanée des systèmes d'aspiration (4).
